(19) Europäisches Patentamt
European Patent Office
Office européen des brevets

(11) **EP 4 242 347 A1**

(12) **EUROPEAN PATENT APPLICATION**
published in accordance with Art. 153(4) EPC

(43) Date of publication:
**13.09.2023 Bulletin 2023/37**

(21) Application number: **21888901.2**

(22) Date of filing: **19.08.2021**

(51) International Patent Classification (IPC):
**C25B 1/02** (2006.01)    **C01B 3/56** (2006.01)
**C25B 15/00** (2006.01)    **C25B 15/02** (2021.01)

(52) Cooperative Patent Classification (CPC):
**C01B 3/56; C25B 1/02; C25B 15/00; C25B 15/02;**
Y02E 60/50

(86) International application number:
**PCT/JP2021/030307**

(87) International publication number:
**WO 2022/097348 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.11.2020 JP 2020185530**

(71) Applicant: **Panasonic Intellectual Property
Management Co., Ltd.
Osaka-shi, Osaka 540-6207 (JP)**

(72) Inventors:
• **NAKAUE Takayuki**
**Osaka-shi, Osaka (JP)**
• **KAMATA Tomoya**
**Osaka-shi, Osaka (JP)**
• **KANI Yukimune**
**Osaka-shi, Osaka (JP)**

(74) Representative: **Grünecker Patent- und
Rechtsanwälte
PartG mbB
Leopoldstraße 4
80802 München (DE)**

(54) **HYDROGEN SYSTEM AND METHOD FOR OPERATING HYDROGEN SYSTEM**

(57) A hydrogen system includes: a compressor that causes, by application of a voltage between an anode and a cathode, hydrogen in a hydrogen-containing gas supplied to the anode to move to the cathode through an electrolyte membrane and compresses the hydrogen; a first flow channel that supplies the hydrogen-containing gas to the anode; a second flow channel that branches off from the first flow channel and supplies the hydrogen-containing gas to the cathode; and a check valve that is provided in the second flow channel and prevents a flow in a direction opposite to a flow of the hydrogen-containing gas to be supplied to the cathode.

FIG. 1

**Description**

Technical Field

The present disclosure relates to a hydrogen system and a hydrogen system operating method.

Background Art

Hydrogen has drawn attention in recent years as a clean alternative energy source that replaces fossil fuels, in light of environmental issues such as global warming and energy issues such as depletion of petroleum resources. Hydrogen combustion basically releases only water, and emits no carbon dioxide that is the main cause of the global warming. Further, it emits almost no nitrogen oxides or the like. Thus, great expectations are placed on hydrogen as the clean energy source. As apparatuses designed to use hydrogen as fuel highly efficiently, for example, fuel cells have been developed and become widely in use for automobile power supplies and household power generators.

The upcoming hydrogen society requires, as well as hydrogen production, technological developments that enable hydrogen to be stored in high concentration and to be transported or used in smaller amounts at lower costs. Particularly, hydrogen supply infrastructure needs to be in place for the purpose of promoting wide use of fuel cells as distributed energy sources. In this context, in order to ensure stable hydrogen supply, various studies are underway for production, purification, and high-concentration storage of high-purity hydrogen.

For example, PTL 1 describes a hydrogen supply system in which an electrolyte membrane is provided between an anode and a cathode and a voltage is applied between the anode and the cathode to thereby purify and pressurize hydrogen. A layered structure including an anode, an electrolyte membrane, and a cathode is referred to as a membrane electrode assembly (MEA).

PTL 1 discloses that before the electrochemical hydrogen pump starts a hydrogen compressing operation, the cathode gas pressure and the anode gas pressure are controlled so that the cathode gas pressure is higher than the anode gas pressure. This control enables the electrochemical hydrogen pump to keep the hydrogen compressing operation highly efficient.

Citation List

Patent Literature

PTL 1: Japanese Unexamined Patent Application Publication No. 2019-206749

Summary of Invention

Technical Problem

The present disclosure aims to provide, for example, a hydrogen system and a hydrogen system operating method that enable a hydrogen compressing operation of a compressor to be kept more efficient than in the related art.

Solution to Problem

A hydrogen system according to an aspect of the present disclosure includes: a compressor that causes, by application of a voltage between an anode and a cathode, hydrogen in a hydrogen-containing gas supplied to the anode to move to the cathode through an electrolyte membrane and compresses the hydrogen; a first flow channel that supplies the hydrogen-containing gas to the anode; a second flow channel that branches off from the first flow channel and supplies the hydrogen-containing gas to the cathode; and a check valve that is provided in the second flow channel and prevents a flow in a direction opposite to a flow of the hydrogen-containing gas to be supplied to the cathode.

A hydrogen system according to an aspect of the present disclosure includes: a compressor that causes, by application of a voltage between an anode and a cathode, hydrogen in a hydrogen-containing gas supplied to the anode to move to the cathode through an electrolyte membrane and compresses the hydrogen; a first flow channel that supplies the hydrogen-containing gas to the anode; a second flow channel that branches off from the first flow channel and supplies the hydrogen-containing gas to the cathode; an on/off valve provided in the second flow channel; and a controller that opens the on/off valve concurrently with a start of supplying the hydrogen-containing gas to the anode through the first flow channel.

A hydrogen system operating method according to an aspect of the present disclosure includes: causing, by applying a voltage between an anode and a cathode, hydrogen in a hydrogen-containing gas supplied to the anode to move to the cathode through an electrolyte membrane and compressing the hydrogen; and causing the hydrogen-containing gas to be supplied to the cathode concurrently with a start of supplying the hydrogen-containing gas to the anode.

Advantageous Effects of Invention

The hydrogen systems and the hydrogen system operating method according to the aspects of the present disclosure bring about the effect of enabling the compressor to keep its hydrogen compressing operation more efficient than in the related art.

Brief Description of Drawings

[Fig. 1] Fig. 1 is a diagram illustrating an example of a hydrogen system according to a first embodiment.
[Fig. 2] Fig. 2 is a diagram illustrating an example of a hydrogen system according to a modification of the first embodiment.
[Fig. 3] Fig. 3 is a diagram illustrating an example of a hydrogen system according to a second embodiment.
[Fig. 4] Fig. 4 is a diagram illustrating an example of a hydrogen system according to a modification of the second embodiment.

Description of Embodiments

As stated above, PTL 1 discloses that before the electrochemical hydrogen pump starts a hydrogen compressing operation, the cathode gas pressure and the anode gas pressure are controlled so that the cathode gas pressure is higher than the anode gas pressure. It is however considered that the invention disclosed in PTL 1 still leaves room for improvement in increasing the efficiency of the hydrogen compressing operation of the electrochemical hydrogen pump.

For example, there is a case where in order to keep the cathode gas pressure higher than the anode gas pressure before the start of supply of a hydrogen-containing gas to the anode, the cathode gas pressure is increased by returning a high-pressure hydrogen gas in a hydrogen tank to the cathode. In this case, the cathode gas pressure needs to be increased again before the hydrogen tank is resupplied, and the efficiency of the electrochemical hydrogen pump accordingly becomes lower. Furthermore, for example, in a case where the cathode gas pressure is made higher than the anode gas pressure by use of a hydrogen supply source for supplying the hydrogen-containing gas to the anode, the supply pressure of the hydrogen-containing gas needs to be decreased by the anode. In this case, the efficiency of the electrochemical hydrogen pump becomes lower than in the case where the pressure of the hydrogen-containing gas supplied from the hydrogen supply source to the anode without decompression is increased.

As a result of intensive studies, the present inventors have found that the above problems can be alleviated by making the anode gas pressure and the cathode gas pressure equal to each other when the hydrogen-containing gas starts to be supplied to the anode, and reach the following aspects of the present disclosure.

A hydrogen system according to a first aspect of the present disclosure includes: a compressor that causes, by application of a voltage between an anode and a cathode, hydrogen in a hydrogen-containing gas supplied to the anode to move to the cathode through an electrolyte membrane and compresses the hydrogen; a first flow channel that supplies the hydrogen-containing gas to the anode; a second flow channel that branches off from the first flow channel and that supplies the hydrogen-containing gas to the cathode; and a check valve that is provided in the second flow channel and that prevents a flow in a direction opposite to a flow of the hydrogen-containing gas to be supplied to the cathode.

Such a configuration enables the hydrogen system according to the aspect to keep the hydrogen compressing operation of the compressor more efficient than in the related art.

Specifically, in a case where the supply pressure of the hydrogen-containing gas from the hydrogen supply source is higher than the cathode gas pressure when the supply of the hydrogen-containing gas to the anode is started, the differential pressure between those pressures works in a direction of opening a check valve. Thereby, the check valve need not be controlled by using external power. Accordingly, the supply of the hydrogen-containing gas from the branch point in the first flow channel to the cathode is automatically started through the second flow channel. Thus, the anode gas pressure and the cathode gas pressure can be made equal to each other quickly.

It should be noted that "the anode gas pressure and the cathode gas pressure are equal to each other" in the present specification does not require the anode gas pressure and the cathode gas pressure to be completely equal to each other and may include a case where a differential pressure occurs corresponding to the difference between pressure loss in the first flow channel and pressure loss in the second flow channel.

Although the cathode gas pressure is higher than the anode gas pressure while the compressor is performing the hydrogen compressing operation, there is a possibility that the supply pressure of the hydrogen-containing gas from the hydrogen supply source may reverse the relationship in magnitude between the anode gas pressure and the cathode gas pressure (the anode gas pressure > the cathode gas pressure) when the supply of the hydrogen-containing gas to the anode is started. This causes a possibility that the reversal of the differential pressure between those pressures may damage the electrolyte membrane and the gas diffusion layer, the damage may increase the contact resistance of the MEA, and accordingly, the efficiency of the hydrogen compressing operation of the compressor may become lower.

The hydrogen system according to the aspect, however, can make the anode gas pressure and the cathode gas pressure equal to each other by automatically opening the check valve provided in the second flow channel, when starting to supply the hydrogen-containing gas to the anode. The system accordingly can alleviate the damage to the electrolyte membrane and the gas diffusion layer.

A hydrogen system according to a second aspect of the present disclosure includes: a compressor that causes, by application of a voltage between an anode and a cathode, hydrogen in a hydrogen-containing gas supplied to the anode to move to the cathode through an electrolyte membrane and compresses the hydrogen; a first flow channel that supplies the hydrogen-containing gas to the anode; a second flow channel that branches off from the first flow channel and that supplies the hydrogen-containing gas to the cathode; an on/off valve provided in the second flow channel; and a controller that opens the on/off valve concurrently with a start of supplying the hydrogen-containing gas to the anode through the first flow channel.

Such a configuration enables the hydrogen system according to the embodiment to keep the hydrogen compressing operation of the compressor more efficient than in the related art.

Specifically, since the on/off valve is opened concurrently with a start of supplying the hydrogen-containing gas to the anode through the first flow channel, the supply of the hydrogen-containing gas from the branch point in the first flow channel to the cathode is started through the second flow channel at an appropriate time. Thereby, the anode gas pressure and the cathode gas pressure can be made equal to each other quickly.

PTL1 discloses a configuration to supply the hydrogen-containing gas to the cathode CA before the start of the supply of the hydrogen-containing gas to the anode AN, and a configuration to supply the hydrogen-containing gas having passed the cathode CA to the anode AN through a pressure loss section 16, as illustrated in Fig. 7A. However, since the configurations illustrated in Fig. 7A supply the hydrogen-containing gas to the anode AN after once making the hydrogen-containing gas pass the cathode CA, the configurations have a possibility that water and the like accumulating in the cathode CA may be supplied to the anode AN together with the hydrogen-containing gas. This poses a possibility that excessive water may be supplied to the anode AN, and flooding may occur in the anode AN. In contrast to this, the hydrogen system according to the aspect simultaneously supplies the cathode and the anode, respectively, with the hydrogen-containing gases in similar wet conditions, and accordingly decreases the above possibilities.

Although the cathode gas pressure is higher than the anode gas pressure while the compressor is performing the hydrogen compressing operation, there is a possibility that the supply pressure of the hydrogen-containing gas from the hydrogen supply source may reverse the relationship in magnitude between the anode gas pressure and the cathode gas pressure (the anode gas pressure > the cathode gas pressure) when the supply of the hydrogen-containing gas to the anode is started. This causes a possibility that the reversal of the differential pressure between those pressures may damage the electrolyte membrane and the gas diffusion layer, the damage may increase the contact resistance of the MEA, and accordingly, the efficiency of the hydrogen compressing operation of an electrochemical hydrogen pump may become lower.

The hydrogen system according to the aspect, however, can make the anode gas pressure and the cathode gas pressure equal to each other by opening the on/off valve provided in the second flow channel concurrently with a start of supplying the hydrogen-containing gas to the anode. The system accordingly can alleviate the damage to the electrolyte membrane and the gas diffusion layer.

The hydrogen system according to a third aspect of the present disclosure in the first or second aspect may further include a pressure loss section provided in the first flow channel at a position downstream of a branch point at which the second flow channel branches.

In the hydrogen system according to a fourth aspect of the present disclosure in any one of the first to third aspects, pressure loss in the second flow channel may be smaller than that in the first flow channel downstream of a branch point at which the second flow channel branches.

The above configurations enable the hydrogen systems according to the aspects to supply the hydrogen-containing gas to the cathode before supplying the hydrogen-containing gas to the anode, since the pressure loss in the second flow channel is smaller than the pressure loss in the first flow channel downstream of the branch point at which the second flow channel branches off from the first flow channel. Thereby, the reversal of the relationship in magnitude between the anode gas pressure and the cathode gas pressure (the anode gas pressure > the cathode gas pressure) can be appropriately suppressed.

In the hydrogen system according to a fifth aspect of the present disclosure in any one of the first to fourth aspects, a supply pressure of the hydrogen-containing gas supplied through the first flow channel may be greater than or equal to 0.1 MPaG and less than or equal to 20 MPaG.

A hydrogen system operating method according to a sixth aspect of the present disclosure includes: causing, by applying a voltage between an anode and a cathode, hydrogen in a hydrogen-containing gas supplied to the anode to move to the cathode through an electrolyte membrane and compressing the hydrogen; and causing the hydrogen-containing gas to be supplied to the cathode concurrently with a start of supplying the hydrogen-containing gas to the anode.

Thereby, the hydrogen system operating method according to the aspect can keep the hydrogen compressing operation of the compressor more efficient than in the related art. The detailed operation and effects achieved by the hydrogen system operating method according to the aspect are the same as the detailed operation and effects achieved by the hydrogen system according to the first or second aspect. Thus, detailed descriptions will be omitted.

Embodiments in the present disclosure will be hereinbelow described referring to the attached drawings. The embodiments described below are examples of the above aspects. Thus, shapes, materials, components, places where to arrange the components, modes of connection between the components and the like that will be described below are merely examples, and are not intended to limit any of the above aspects unless otherwise described in claims. Furthermore, among the components below, components not described in the independent claims indicating the highest-level concepts of the above aspects are described as optional components. In addition, there are cases where descriptions are omitted for components denoted by the same reference numerals in the drawings. The drawings schematically illustrate the components in order to make the components understood easily. Thus, there are cases where shapes, dimension ratios and the like of the components are not necessarily indicated exactly.

(First Embodiment)

The following embodiment describes a configuration and an operation of a hydrogen system including an electrochemical hydrogen pump that is an example of the above compressor.

[System Configuration]

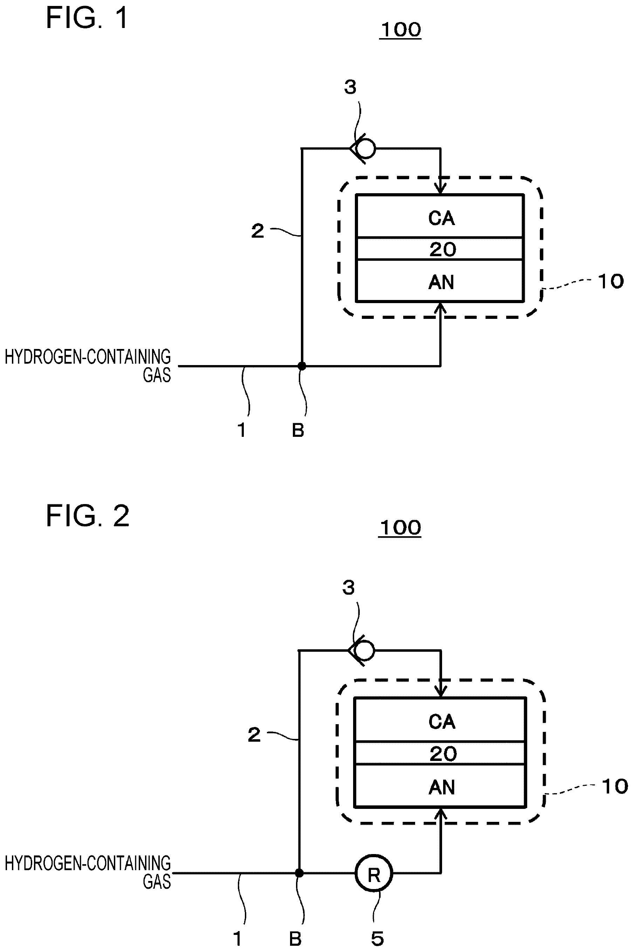

Fig. 1 is a diagram illustrating an example of the hydrogen system according to a first embodiment.

In the example illustrated in Fig. 1, a hydrogen system 100 according to the embodiment includes an electrochemical hydrogen pump 10, a first flow channel 1, a second flow channel 2, and a check valve 3.

A cell of the electrochemical hydrogen pump 10 includes an electrolyte membrane 20, an anode AN, and a cathode CA. The electrochemical hydrogen pump 10 may include a stack of multiple cells arranged in a pile. The details will be described later.

The anode AN is provided on one main surface of the electrolyte membrane 20. The anode AN is an electrode including an anode catalyst layer and an anode gas diffusion layer. The cathode CA is provided on the other main surface of the electrolyte membrane 20. The cathode CA is an electrode including a cathode catalyst layer and a cathode gas diffusion layer. Thereby, the electrolyte membrane 20 is held between the anode AN and the cathode CA while being contact with the anode catalyst layer and the cathode catalyst layer.

The electrolyte membrane 20 may have any configuration as long as it is proton conductive. Examples of the electrolyte membrane 20 include a fluorine-based polymer electrolyte membrane and a hydrocarbon-based electrolyte membrane. Specifically, for example, Nafion (registered trademark, made by DuPont), Aciplex (registered trademark, made by Asahi Kasei Corporation) or the like may be used as the electrolyte membrane 20. However, the electrolyte membrane 20 is not limited to these examples.

The anode catalyst layer is provided on the one main surface of the electrolyte membrane 20. The anode catalyst layer includes carbon that can support a catalyst metal (for example, platinum) in a dispersed state, but is not limited to this example.

The cathode catalyst layer is provided on the other main surface of the electrolyte membrane 20. The cathode catalyst layer includes carbon that can support a catalyst metal (for example, platinum) in a dispersed state, but is not limited to this example.

Various catalyst preparation methods may be used for the cathode catalyst layer and the anode catalyst layer, but are not specifically limited. For example, powder of graphite, carbon black, conductive activated carbon, or the like may be used as carbon-based powder. A method of making a carbon carrier support platinum or another catalyst metal is not specifically limited. For example, a powder mixing method, a liquid-phase mixing method, or the like may be used. Examples of the liquid-phase mixing method includes a method of making the carbon carrier or the like adsorb a catalyst-component colloidal liquid by dispersing the carbon carrier or the like in the catalyst-component colloidal liquid. A state how a catalyst metal such as platinum is supported by the carbon carrier is not specifically limited. For example, an atomized catalyst metal powder may be supported by the carrier in a highly-dispersed state.

The cathode gas diffusion layer is provided on the cathode catalyst layer. The cathode gas diffusion layer is made from a porous material and has a conductivity property and a gas-diffusion property. It is desirable that the cathode gas diffusion layer be elastic enough to appropriately follow the displacement and deformation of the components being caused by a differential pressure between the cathode CA and the anode AN while the electrochemical hydrogen pump 10 is in operation. For example, a carbon fiber sintered body, a titanium fiber sintered body, or the like may be used as a base material of the cathode gas diffusion layer. However, the base material thereof is not limited to these examples.

The anode gas diffusion layer is provided on the anode catalyst layer. The anode gas diffusion layer is made from a porous material, and has a conductivity property and a gas-diffusion property. It is desirable that the anode gas diffusion layer be rigid enough to withstand being pressed by the electrolyte membrane 20 due to the differential pressure while the electrochemical hydrogen pump 10 is in operation. For example, a titanium particle sintered body, a carbon particle sintered body, or the like may be used as a base material of the anode gas diffusion layer. However, the base material thereof is not limited to these examples.

Although not illustrated in the drawings, the electrochemical hydrogen pump 10 includes a voltage applier.

The voltage applier is a device that applies a voltage between the anode AN and the cathode CA. The voltage applier may have any configuration as long as it can apply a voltage between the anode AN and the cathode CA. For example, a high-potential terminal of the voltage applier is connected to the anode AN, and a low-potential terminal of the voltage applier is connected to the cathode CA. Examples of such a voltage applier include a DC/DC converter and an AC/DC converter. The DC/DC converter is used in a case where the voltage applier is connected to a DC power supply such as a solar cell, a fuel cell, or a battery. The AC/DC converter is used in a case where the voltage applier is connected to an AC power supply such as a commercial power supply. Otherwise, the voltage applier may be, for example, a power-type power supply that controls the voltage applied between the anode AN and the cathode CA, and an electrical current flowing between the anode AN and the cathode CA, in order for the power to be supplied to the cell to be kept at a predetermined value.

The electrochemical hydrogen pump 10 uses the voltage applier to energize the anode AN and the cathode CA. In other words, the electrochemical hydrogen pump 10 is a device that causes, by the voltage applier applying the voltage between the anode AN and the cathode CA, hydrogen in the hydrogen-containing gas supplied to the anode AN to move to the cathode CA, and compresses the hydrogen.

The hydrogen-containing gas may be, for example, a hydrogen gas generated by water electrolysis, or a reformed gas generated by a reforming reaction of a hydrocarbon gas.

Although not illustrated in Fig. 1, the hydrogen system 100 is appropriately provided with members and devices that are needed for a hydrogen compressing operation.

For example, a pair of separators may hold the anode AN and the cathode CA, respectively, from the outsides of the anode AN and the cathode CA. In this case, the separator in contact with the anode AN is a conductive plate-shaped member for supplying the hydrogen-containing gas to the anode AN. This plate-shaped member includes a serpentine-shaped gas flow passage through which the hydrogen-containing gas to be supplied to the anode AN flows. The separator in contact with the cathode CA is a conductive plate-shaped member for deriving hydrogen from the cathode CA. This plate-shaped member includes a gas flow passage through which the hydrogen derived from the cathode CA flows.

Furthermore, the electrochemical hydrogen pump 10 is usually provided with seal members, such as gaskets, at both sides of the cell for the purpose of preventing the high-pressure hydrogen from leaking to the outside. The seal members and the cell of the electrochemical hydrogen pump 10 are assembled into an integrated unit in advance. The separators for mechanically fixing the cell and electrically connecting the cell to an adjacent cell in series are arranged outside the cell.

A layered structure is usually constructed as follows. Approximately 10 to 200 cells are arranged on top of each other into a pile (stack) with the cells and the separators placed alternately. The stack is put between end plates with a current collector plate and an insulation plate interposed between the stack and the end plates. The end plates are tightened together using fastening rods. In this case, the supply of an appropriate amount of hydrogen-containing gas to the gas flow passage in each separator requires a configuration in which, in the separator, groove-shaped branch pathways branch off from an appropriate pipe, and downstream ends of the branch pathways are connected to the gas flow passage in the separator. Such a pipe is referred to as a manifold. This manifold includes a series of through holes provided in appropriate parts of each of the members formed into the stack.

The hydrogen system 100 may further include a temperature sensor that detects the cell temperature, a temperature controller that controls the cell temperature, and a dew point controller that controls the dew point of the hydrogen-containing gas supplied to the anode AN.

The above members and devices not illustrated are examples, and are not limited to these examples.

Next, descriptions will be provided for the flow channel configuration of the hydrogen system 100 according to the embodiment.

The first flow channel 1 is a flow channel that supplies the hydrogen-containing gas to the anode AN of the electrochemical hydrogen pump 10.

The downstream end of the first flow channel 1 may be connected to any portion of the anode AN of the electrochemical hydrogen pump 10 as long as the downstream end thereof communicates with the anode AN at the portion. For example, in the case where the electrochemical hydrogen pump 10 includes the above-discussed stack, the downstream end of the first flow channel 1 may communicate with a manifold that introduces the hydrogen-containing gas.

The upstream end pf the first flow channel 1 may be connected, for example, to an appropriate hydrogen supply source. Examples of the hydrogen supply source include a water electrolysis device, a reformer, and a hydrogen tank. In this case, the supply pressure of the hydrogen-containing gas to be supplied through the first flow channel 1 may be, for example, greater than or equal to 0.1 MPaG and less than or equal to 20 MPaG.

The second flow channel 2 is a flow channel that branches off from the first flow channel 1 and that supplies the hydrogen-containing gas to the cathode CA of the electrochemical hydrogen pump 10. Specifically, the upstream end of the second flow channel 2 is connected to the first flow channel 1 at a branch point B. The second flow channel 2 extends to communicate with the cathode CA of the electrochemical hydrogen pump 10. The downstream end of the second flow channel 2 may be connected to any portion of the cathode CA of the electrochemical hydrogen pump 10 as long as the downstream end thereof communicates with the cathode CA at the portion. For example, in the case where the electrochemical hydrogen pump 10 includes the above-discussed stack, the downstream end of the second flow channel 2 may communicate with a manifold that derives the hydrogen.

The hydrogen system 100 may be configured to supply the hydrogen compressed by the cathode CA of the electrochemical hydrogen pump 10 to an appropriate hydrogen reservoir (not illustrated) through a flow channel (not illustrated). Examples of the hydrogen reservoir include a hydrogen tank that can be filled with hydrogen at a pressure of tens of MPaG.

As illustrated in Fig. 1, the check valve 3 is provided to the second flow channel 2. The check valve 3 is a valve that prevents a flow in a direction opposite to a flow of the hydrogen-containing gas to be supplied to the cathode CA of the electrochemical hydrogen pump 10. In other words, the check valve 3 is configured to automatically cause the hydrogen-containing gas having flowed through the first flow channel 1 to flow from the branch point B through the second flow channel 2 toward the cathode CA (in a forward direction), and to automatically prevent backward flow of the hydrogen-containing gas.

[Operation]

An example of the hydrogen compressing operation of the hydrogen system 100 will be hereinafter described referring to the drawing.

The following operation may be performed, for example, by a controller (not illustrated in Fig. 1) whose arithmetic circuit reads a control program from a storage circuit of the controller. However, it is not necessarily essential that the following operation be performed by the controller 50. Part of the operation may be performed by an operator. The following descriptions will be provided for the case where the operation is controlled by the controller.

To begin with, the hydrogen-containing gas starts to be supplied to the anode AN of the electrochemical hydrogen pump 10 through the first flow channel 1. The supply of the hydrogen-containing gas to the anode AN may be started, for example, by the opening of a tap valve (not illustrated) of the hydrogen supply source that is provided to the upstream end of the first flow channel 1.

Concurrently with the start of supplying the hydrogen-containing gas to the anode AN, an operation for starting to supply the hydrogen-containing gas to the cathode CA is performed. In other words, in the case where the supply pressure of the hydrogen-containing gas is higher than the cathode gas pressure, the differential pressure between those pressures works in a direction of opening the check valve 3. Thereby, the supply of the hydrogen-containing gas from the branch point B of the first flow channel 1 to the cathode CA is automatically started through the second flow channel 2. At this event, the supply pressure of the hydrogen-containing gas to be supplied through the first flow channel 1 may be, for example, greater than or equal to 0.1 MPaG and less than or equal to 20 MPaG.

Next, once the hydrogen-containing gas is supplied to the anode AN through the first flow channel 1 and the voltage of the voltage applier is supplied to the electrochemical hydrogen pump 10, hydrogen molecules in the hydrogen-containing gas are separated into protons and electrons (Formula (1)) in the anode catalyst layer of the anode AN. The protons pass through the inside of the electrolyte membrane 20 and move to the cathode catalyst layer. The electrons move to the cathode catalyst layer through the voltage applier. Thereafter, the hydrogen molecules are generated again (Formula (2)) in the cathode catalyst layer. It is known that while the protons are passing through the inside of the electrolyte membrane 20, a predetermined amount of water as electro-osmotic water moves from the anode AN to the cathode CA together with the protons.

At this event, pressure loss in the flow channel of the gas derived from the cathode CA is increased by use of a back pressure valve, a control valve (not illustrated), or the like provided in the flow channel. Thereby, the hydrogen

(H$_2$) generated by the cathode CA can be compressed.

$$\text{Anode: } H_2 \text{ (low pressure)} \rightarrow 2H^{+}+2e^{-} \qquad \text{... Formula (1)}$$

$$\text{Cathode: } 2H^{+}+2e^{-} \rightarrow H_2 \text{ (high pressure)} \qquad \text{... Formula (2)}$$

Accordingly, the hydrogen system 100 applies the voltage between the anode AN and the cathode CA of the electrochemical hydrogen pump 10 to thereby perform the operation of causing the hydrogen in the hydrogen-containing gas supplied to the anode AN to move to the cathode CA through the electrolyte membrane 20, and compresses the hydrogen. Even in the case where the pressure of the hydrogen compressed by the cathode CA is higher than the supply pressure of the hydrogen-containing gas to be supplied through the first flow channel 1, when the hydrogen is about to flow backward through the second flow channel 2, the check valve 3 is automatically closed.

The hydrogen compressed by the cathode CA is temporarily stored, for example, in the hydrogen reservoir (not illustrated). Furthermore, the hydrogen stored in the hydrogen reservoir is supplied to a hydrogen demand body at appropriate times. Examples of the hydrogen demand body include a fuel cell that generates power using the hydrogen.

Next, the application of the voltage between the anode AN and the cathode CA of the electrochemical hydrogen pump 10 is stopped. Thereby, the operation of compressing the hydrogen is stopped.

As stated above, the hydrogen system 100 and the method of operating hydrogen system 100 according to the embodiment can keep the hydrogen compressing operation of the electrochemical hydrogen pump 10 more efficient than in the related art.

Specifically, in the case where the supply pressure of the hydrogen-containing gas from the hydrogen supply source is higher than the cathode gas pressure when the hydrogen-containing gas starts to be supplied to the anode AN, the differential pressure between those pressures works in the direction of opening the check valve 3. Thereby, the check valve 3 need not be controlled by using external power. Accordingly, the supply of the hydrogen-containing gas from the branch point B in the first flow channel 1 to the cathode CA is automatically started through the second flow channel 2. Thus, the anode gas pressure and the cathode gas pressure can be made equal to each other quickly.

Although the cathode gas pressure is higher than the anode gas pressure while the electrochemical hydrogen pump 10 is performing the hydrogen compressing operation, there is a possibility that the supply pressure of the hydrogen-containing gas from the hydrogen supply source may reverse the relationship in magnitude between the anode gas pressure and the cathode gas pressure (the anode gas pressure > the cathode gas pressure) when the supply of the hydrogen-containing gas to the anode AN is started. This causes a possibility that the reversal of the differential pressure between those pressures may damage the electrolyte membrane 20 and the gas diffusion layer, the damage may increase the contact resistance of the MEA, and accordingly, the efficiency of the hydrogen compressing operation of the electrochemical hydrogen pump 10 may become lower.

The hydrogen system 100 and the method of operating the hydrogen system 100 according to the embodiment, however, can make the anode gas pressure and the cathode gas pressure equal to each other by automatically opening the check valve 3 provided in the second flow channel 2 when starting to supply the hydrogen-containing gas to the anode AN. The system and the method accordingly can alleviate the damage to the electrolyte membrane 20 and the gas diffusion layer.

(Modification)

Fig. 2 is a diagram illustrating an example of a hydrogen system according to a modification of the first embodiment.

In the example illustrated in Fig. 2, the hydrogen system 100 according to the modification includes the electrochemical hydrogen pump 10, the first flow channel 1, the second flow channel 2, the check valve 3, and a pressure loss section 6.

The electrochemical hydrogen pump 10, the first flow channel 1, the second flow channel 2 and the check valve 3 are the same as those in the first embodiment. Thus, detailed descriptions for them will be omitted.

The pressure loss section 6 is provided in the first flow channel 1 downstream of the branch point B at which the second flow channel 2 branches off from the first flow channel 1. The pressure loss section 6 may have any configuration as long as it can sets a desired pressure loss in the first flow channel 1 downstream of the branch point B at which the second flow channel 2 branches off from the first flow channel 1. For example, the pressure loss section 6 may be realized by reducing the diameter of a portion of the pipe forming the first flow channel 1 downstream of the branch point B at which the second flow channel 2 branches off from the first flow channel 1, in comparison with the diameter of the rest of the pipe. Otherwise, the pressure loss section 6 may be realized by providing a valve, such as a check valve, to the first flow channel 1 downstream of the branch channel B at which the second flow channel 2 branches off from the first flow channel 1.

Furthermore, in the hydrogen system 100 according to the modification, the pressure loss in the second flow channel 2 is smaller than the pressure loss in the first flow channel 1 downstream of the branch point B at which the second flow channel 2 branches off from the first flow channel 1. For example, using the pressure loss section 6, the relationship in magnitude between the pressure loss in the second flow channel 2 and the pressure loss in the first flow channel 1 downstream of the branch point B at which the second flow channel 2 branches off from the first flow channel 1 can be set as stated above. In the case where the pressure loss section 6 is formed from a valve, the pressure loss caused by the valve is larger than the pressure loss caused by the check valve 3 provided in the second flow channel 2.

Since the pressure loss in the second flow channel 2 is smaller than the pressure loss in the first flow channel 1 downstream of the branch point B at which the second flow channel 2 branches off from the first flow channel 1, the hydrogen system 100 according to the modification can supply the hydrogen-containing gas to the cathode CA before supplying the hydrogen-containing gas to the anode AN. Thereby, the reversal of the relationship in magnitude between the anode gas pressure and the cathode gas pressure (the anode gas pressure > the anode gas pressure) is appropriately suppressed.

Except for the above characteristics, the hydrogen system 100 according to the modification may have the same characteristics as the hydrogen system 100 according to the first embodiment.

(Second Embodiment)

[System Configuration]

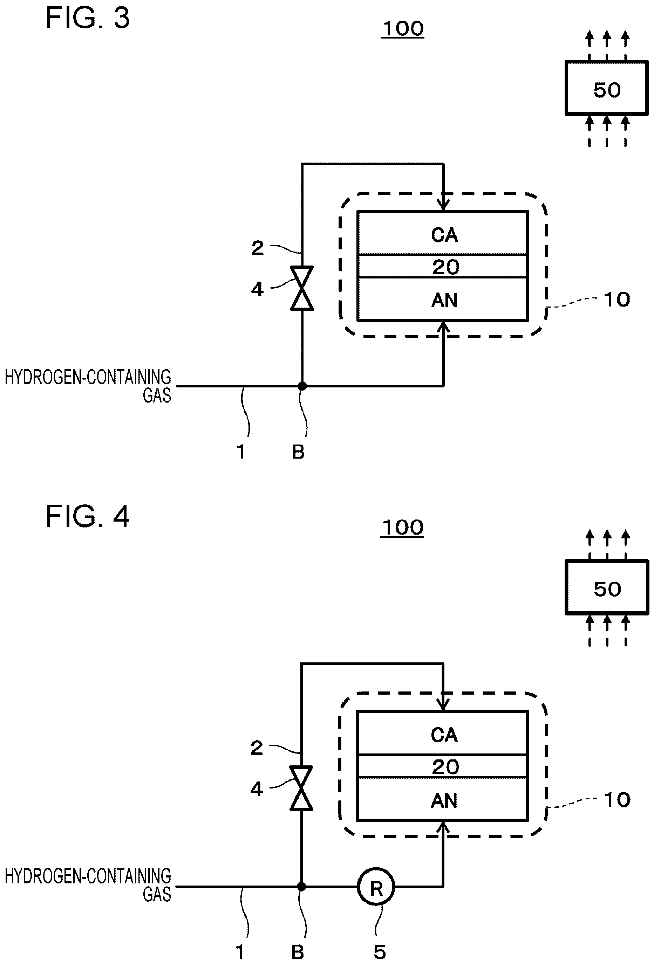

Fig. 3 is a diagram illustrating an example of a hydrogen system according to a second embodiment.

In the example illustrated in Fig. 3, the hydrogen system 100 according to the embodiment includes the electrochemical hydrogen pump 10, the first flow channel 1, the second flow channel 2, an on/off valve 4, and a controller 50.

The electrochemical hydrogen pump 10, the first flow channel 1, and the second flow channel 2 are the same as those in the first embodiment. Thus, detailed descriptions for them will be omitted.

The on/off valve 4 is provided in the second flow channel 2. The on/off valve 4 may have any configuration as long as it can open and close the second flow channel 2. For example, a drive valve that is driven by a nitrogen gas or the like, a solenoid valve, or the like may be used as the on/off valve 4. However, the on/off valve 4 is not specifically limited to these examples.

The controller 50 opens the on/off valve 4 concurrently with the start of supplying the hydrogen-containing gas to the anode AN through the first flow channel 1. The controller 50 may control all the operation of the hydrogen system 100. The supply of the hydrogen-containing gas to the anode AN may be started, for example, by the controller 50 opening the tap valve (not illustrated) of the hydrogen supply source that is provided to the upstream end of the first flow channel 1.

The controller 50 includes, for example, an arithmetic circuit (not illustrated) and a storage circuit (not illustrated) that stores a control program. Examples of the arithmetic circuit include a MPU and a CPU. Examples of the storage circuit include a memory. The controller 50 may be a single controller that performs centralized control, or may be built up from multiple controllers that perform distributed control in cooperation together.

[Operation]

An example of the hydrogen compressing operation of the hydrogen system 100 will be hereinafter described referring to the drawing.

The following operation may be performed, for example, by the controller 50, whose arithmetic circuit reads the control program from the storage circuit of the controller 50. However, it is not necessarily essential that the following operation be performed by the controller 50. Part of the operation may be performed by an operator. The following descriptions will be provided for the case where the operation is controlled by the controller 50.

To begin with, the hydrogen-containing gas starts to be supplied to the anode AN of the electrochemical hydrogen pump 10 through the first flow channel 1. The supply of the hydrogen-containing gas to the anode AN may be started, for example, by the opening of the tap valve (not illustrated) of the hydrogen supply source that is provided to the upstream end of the first flow channel 1.

Concurrently with the start of supplying the hydrogen-containing gas to the anode AN, an operation for starting to supply the hydrogen-containing gas to the cathode CA is performed. In other words, the on/off valve 4 is opened concurrently with the start of supplying the hydrogen-containing gas. At this event, the supply pressure of the hydrogen-containing gas to be supplied through the first flow channel 1 may be, for example, greater than or equal to 0.1 MPaG and less than or equal to 20 MPaG.

Next, once the hydrogen-containing gas is supplied to the anode AN through the first flow channel 1 and the voltage of the voltage applier is supplied to the electrochemical hydrogen pump 10, hydrogen molecules in the hydrogen-containing gas are separated into protons and electrons (Formula (1)) in the anode catalyst layer of the anode AN. The protons pass through the inside of the electrolyte membrane 20, and move to the cathode catalyst layer. The electrons move to the cathode catalyst layer through the voltage applier. Thereafter, the hydrogen molecules are generated again (Formula (2)) in the cathode catalyst layer. It is known that while the protons are passing through the inside of the electrolyte membrane 20, a predetermined amount of water as electro-osmotic water moves from the anode AN to the cathode CA together with the protons.

At this event, the pressure loss in the flow channel of the gas derived from the cathode CA is increased by use of a back pressure valve, a control valve (not illustrated), or the like that is provided in the flow channel. Thereby, the hydrogen ($H_2$) generated by the cathode CA can be compressed. At this time, the on/off valve 4 is closed.

$$\text{Anode: } H_2 \text{ (low pressure)} \rightarrow 2H^+ + 2e^- \qquad \text{... Formula (1)}$$

$$\text{Cathode: } 2H^+ + 2e^- \rightarrow H_2 \text{ (high pressure)} \qquad \text{... Formula (2)}$$

Accordingly, the hydrogen system 100 applies the voltage between the anode AN and the cathode CA of the electrochemical hydrogen pump 10 to thereby perform the operation of causing the hydrogen in the hydrogen-containing gas supplied to the anode AN to move to the cathode CA through the electrolyte membrane 20, and compresses the hydrogen.

The hydrogen compressed by the cathode CA is temporarily stored, for example, in the hydrogen reservoir (not illustrated). Furthermore, the hydrogen stored in the hydrogen reservoir is supplied to a hydrogen demand body at appropriate times. Examples of the hydrogen demand body include a fuel cell that generates power using the hydrogen.

Next, the application of the voltage between the anode AN and the cathode CA of the electrochemical hydrogen pump 10 is stopped. Thereby, the operation of compressing the hydrogen is stopped.

As stated above, the hydrogen system 100 and the method of operating hydrogen system 100 according to the embodiment can keep the hydrogen compressing operation of the electrochemical hydrogen pump 10 more efficient than in the related art.

Specifically, since the on/off valve 4 is opened concurrently with the start of supplying the hydrogen-containing gas to the anode AN through the first flow channel 1, the supply of the hydrogen-containing gas to the cathode CA from the branch point B in the first flow channel 1 is started through the second flow channel 2 at an appropriate time. Thereby, the anode gas pressure and the cathode gas pressure can be made equal to each other quickly.

Although the cathode gas pressure is higher than the anode gas pressure while the electrochemical hydrogen pump 10 is performing the hydrogen compressing operation, there is a possibility that the supply pressure of the hydrogen-containing gas from the hydrogen supply source may reverse the relationship in magnitude between the anode gas pressure and the cathode gas pressure (the anode gas pressure > the cathode gas pressure) when the supply of the hydrogen-containing gas to the anode AN is started. This causes a possibility that the reversal of the differential pressure between those pressures may damage the electrolyte membrane 20 and the gas diffusion layer, the damage may increase the contact resistance of the MEA, and accordingly, the efficiency of the hydrogen compressing operation of the electrochemical hydrogen pump 10 may become lower.

The hydrogen system 100 and the method of operating the hydrogen system 100 according to the embodiment, however, can make the anode gas pressure and the cathode gas pressure equal to each other by opening the on/off valve 4 provided in the second flow channel 2, concurrently with the start of supplying the hydrogen-containing gas to the anode AN. The system and the method accordingly can alleviate the damage to the electrolyte membrane 20 and the gas diffusion layer.

Except for the above characteristics, the hydrogen system 100 according to the embodiment may have the same characteristics as the hydrogen system 100 according to the first embodiment.

(Modification)

Fig. 4 is a diagram illustrating an example of a hydrogen system according to a modification of the first embodiment.

In the example illustrated in Fig. 4, the hydrogen system 100 according to the modification includes the electrochemical hydrogen pump 10, the first flow channel 1, the second flow channel 2, the on/off valve 4, and the pressure loss section 6.

The electrochemical hydrogen pump 10, the first flow channel 1, the second flow channel 2 and the on/off valve 4 are the same as those in the first embodiment. Thus, detailed descriptions for them will be omitted. The pressure loss section 6 is the same as that in the modification of the first embodiment. Thus, detailed descriptions for it will be omitted.

In the hydrogen system 100 according to the modification, the pressure loss in the second flow channel 2 is smaller than the pressure loss in the first flow channel 1 downstream of the branch point B at which the second flow channel 2 branches off from the first flow channel 1. For example, using the pressure loss section 6, the relationship in magnitude between the pressure loss in the second flow channel 2 and the pressure loss in the first flow channel 1 downstream of the branch point B at which the second flow channel 2 branches off from the first flow channel 1 can be set as stated above. In the case where the pressure loss section 6 is formed from a valve, the pressure loss caused by the valve is larger than the pressure loss caused when the on/off valve 4 provided in the second flow channel 2 is opened.

Since the pressure loss in the second flow channel 2 is smaller than the pressure loss in the first flow channel 1 downstream of the branch point B at which the second flow channel 2 branches off from the first flow channel 1, the hydrogen system 100 according to the modification can supply the hydrogen-containing gas to the cathode CA before supplying the hydrogen-containing gas to the anode AN. Thereby, the reversal of the relationship in magnitude between the anode gas pressure and the cathode gas pressure (the anode gas pressure > the anode gas pressure) is appropriately suppressed.

Except for the above characteristics, the hydrogen system 100 according to the modification may have the same characteristics as the hydrogen system 100 according to the second embodiment.

The first embodiment, the modification of the first embodiment, the second embodiment and the modification of the second embodiment may be combined together as long as they do not conflict with one another.

From the above descriptions, numerous improvements in and other embodiments of the present disclosure are apparent to those skilled in the art. The descriptions, therefore, shall be construed as showing examples, and are provided for the purpose of letting those skilled in the art know the best modes for carrying out the present disclosure. Details of the structures and/or functions can be substantially changed without departing from the spirit or scope of the present disclosure.

Industrial Applicability

The aspects of the present disclosure can be used for the hydrogen system and the hydrogen system operating method that can keep the hydrogen compressing operation of the compressor more efficient than in the related art in a more simplified way.

Reference Signs List

1       first flow channel
2       second flow channel
3       check valve
4       on/off valve
6       pressure loss section
10      electrochemical hydrogen pump
20      electrolyte membrane
50      controller
100     hydrogen system
AN      anode
B       branch point
CA      cathode

**Claims**

1. A hydrogen system comprising:

   a compressor that causes, by application of a voltage between an anode and a cathode, hydrogen in a hydrogen-containing gas supplied to the anode to move to the cathode through an electrolyte membrane and compresses the hydrogen;
   a first flow channel that supplies the hydrogen-containing gas to the anode;
   a second flow channel that branches off from the first flow channel and supplies the hydrogen-containing gas to the cathode; and
a check valve that is provided in the second flow channel and prevents a flow in a direction opposite to a flow of the hydrogen-containing gas to be supplied to the cathode.

2. A hydrogen system comprising:

a compressor that causes, by application of a voltage between an anode and a cathode, hydrogen in a hydrogen-containing gas supplied to the anode to move to the cathode through an electrolyte membrane and compresses the hydrogen;
a first flow channel that supplies the hydrogen-containing gas to the anode;
a second flow channel that branches off from the first flow channel and supplies the hydrogen-containing gas to the cathode;
an on/off valve provided in the second flow channel; and
a controller that opens the on/off valve concurrently with a start of supplying the hydrogen-containing gas to the anode through the first flow channel.

3. The hydrogen system according to claim 1 or 2, further comprising
a pressure loss section provided in the first flow channel at a position downstream of a branch point at which the second flow channel branches.

4. The hydrogen system according to any one of claims 1 to 3, wherein
pressure loss in the second flow channel is smaller than pressure loss in the first flow channel downstream of a branch point at which the second flow channel branches.

5. The hydrogen system according to any one of claims 1 to 4, wherein
a supply pressure of the hydrogen-containing gas to be supplied through the first flow channel is greater than or equal to 0.1 MPaG and less than or equal to 20 MPaG.

6. A hydrogen system operating method comprising:

causing, by applying a voltage between an anode and a cathode, hydrogen in a hydrogen-containing gas supplied to the anode to move to the cathode through an electrolyte membrane and compressing the hydrogen; and
causing the hydrogen-containing gas to be supplied to the cathode concurrently with a start of supplying the hydrogen-containing gas to the anode.

# FIG. 1

100

HYDROGEN-CONTAINING GAS

# FIG. 2

100

HYDROGEN-CONTAINING GAS

FIG. 3

FIG. 4

## INTERNATIONAL SEARCH REPORT

| International application No. |
|---|
| **PCT/JP2021/030307** |

| A. | CLASSIFICATION OF SUBJECT MATTER |
|---|---|

*C25B 1/02*(2006.01)i; *C01B 3/56*(2006.01)i; *C25B 15/00*(2006.01)i; *C25B 15/02*(2021.01)i
FI:   C25B1/02; C25B15/02; C25B15/00 303; C01B3/56 Z

According to International Patent Classification (IPC) or to both national classification and IPC

| B. | FIELDS SEARCHED |
|---|---|

Minimum documentation searched (classification system followed by classification symbols)

C25B1/02; C01B3/56; C25B15/00; C25B15/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-206749 A (PANASONIC IP MANAGEMENT CORP.) 05 December 2019 (2019-12-05) <br> paragraphs [0160]-[0196], fig. 6-7B | 1-6 |
| A | JP 2018-199852 A (PANASONIC IP MANAGEMENT CORP.) 20 December 2018 (2018-12-20) <br> paragraphs [0102]-[0107], fig. 5 | 1-6 |
| A | JP 2019-099915 A (PANASONIC IP MANAGEMENT CORP.) 24 June 2019 (2019-06-24) <br> paragraphs [0137]-[0145], fig. 5 | 1-6 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 October 2021** | **02 November 2021** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**EP 4 242 347 A1**

| INTERNATIONAL SEARCH REPORT | International application No. |
|---|---|
| | **PCT/JP2021/030307** |

**Box No. III    Observations where unity of invention is lacking (Continuation of item 3 of first sheet)**

This International Searching Authority found multiple inventions in this international application, as follows:

Document 1: JP 2019-206749 A (PANASONIC INTELLECTUAL PROPERTY MANAGEMENT CO., LTD.) 05 December 2019 (2019-12-05), paragraphs [0160]-[0196], fig. 6-7B & US 2019/0363386 A1, paragraphs [0173]-[0209], fig. 6-7C & EP 3573157 A1 & CN 110528012 A

The claims are classified into the following two inventions.
Invention 1: Claim 1 and claims 3-5 referring to claim 1
    Claim 1 and claims 3-5 referring to claim 1 have the special technical feature of
    a "hydrogen system, comprising
    a compressor that applies a voltage between an anode and a cathode to transfer, to the cathode through an electrolytic membrane, hydrogen in hydrogen-containing gas supplied to the anode and compresses the hydrogen,
    a first flow path that supplies hydrogen-containing gas to the anode,
    a second flow path that diverges from the first flow path and supplies hydrogen-containing gas to the cathode, and
    a check valve that is provided in the second flow path and prevents a countercurrent to a flow of hydrogen-containing gas supplied to the cathode", and thus are classified as invention 1.

Invention 2: Claims 2 and 6 and claims 3-5 referring to claim 2
    Claim 2 and claims 3-5 referring to claim 2 and claim 1 classified as invention 1 share the technical feature of
    a "hydrogen system, comprising
    a compressor that applies a voltage between an anode and a cathode to transfer, to the cathode through an electrolytic membrane, hydrogen in hydrogen-containing gas supplied and compresses the hydrogen,
    a first flow path that supplies hydrogen-containing gas to the anode,
    a second flow path that diverges from the first flow path and supplies hydrogen-containing gas to the cathode, and
    a valve that is provided in the second flow path". However, this technical feature does not make a contribution over the prior art in light of the disclosures in document 1, and thus cannot be considered to be a special technical feature. Moreover, there are no other same or corresponding special technical features among these inventions.
    Further, claim 2 and claims 3-5 referring to claim 2 are not substantially identical to or similarly closely related to any of the claims classified as invention 1.
    Thus, claim 2 and claims 3-5 referring to claim 2 cannot be classified as invention 1.
    Claim 2 and claims 3-5 referring to claim 2 have the special technical feature of
    a "hydrogen system, comprising
    a compressor that applies a voltage between an anode and a cathode to transfer, to the cathode through an electrolytic membrane, hydrogen in hydrogen-containing gas supplied to the anode and compresses the hydrogen,
    a first flow path that supplies hydrogen-containing gas to the anode,
    a second flow path that diverges from the first flow path and supplies hydrogen-containing gas to the cathode,
    an on-off valve provided in the second flow path, and
    a controller that opens the on-off valve at the same time as initiation of supply of hydrogen-containing gas to the anode through the first flow path", and thus are classified as invention 2.
    Claim 6 can also be said to have the special technical feature that corresponds to the special technical feature of claim 2 and claims 3-5 referring to claim 2, and thus is also classified as invention 2.

Form PCT/ISA/210 (continuation of first sheet) (January 2015)

16

## INTERNATIONAL SEARCH REPORT

International application No.

**PCT/JP2021/030307**

| Box No. III | Observations where unity of invention is lacking (Continuation of item 3 of first sheet) |
|---|---|

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2021/030307**

| Patent document cited in search report | | | Publication date (day/month/year) | Patent family member(s) | | | Publication date (day/month/year) |
|---|---|---|---|---|---|---|---|
| JP | 2019-206749 | A | 05 December 2019 | US | 2019/0363386 | A1 | |
| | | | | paragraphs [0173]-[0209], fig. 6-7C | | | |
| | | | | EP | 3573157 | A1 | |
| | | | | CN | 110528012 | A | |
| JP | 2018-199852 | A | 20 December 2018 | (Family: none) | | | |
| JP | 2019-099915 | A | 24 June 2019 | US | 2019/0173114 | A1 | |
| | | | | paragraphs [0146]-[0154], fig. 5 | | | |
| | | | | EP | 3492630 | A1 | |
| | | | | CN | 109873182 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019206749 A